# EUROPEAN PATENT APPLICATION

(11) **EP 2 177 817 A2**
(43) Date of publication of application: **21.04.2010**
(21) Application number: 09013251.5
(22) Date of filing: 20.10.2009
(51) Int. Cl.: F21S 8/00, F21V 29/02, G02B 27/09, F21W 131/406, F21V 29/00

(54) **Plasma light source automated luminaire**

(30) Priority: 20.10.2008 US 106969 P; 20.10.2008 US 106976 P; 31.03.2009 US 165281 P; 11.09.2009 US 241664 P; 19.10.2009 US 581805
(71) Applicant: ROBE lighting s.r.o., 75661 Roznov pod Radhostem (CZ)
(72) Inventor: Pavel, Jurik, 75661 Roznov pod Radhostem (CZ)
(74) Representative: Käck, Jürgen

(57) **Abstract**

Disclosed is a plasma light source automated luminaire **12** employing a plasma microwave powered plasma light source **32** employed with a collimating light collector **38** together with other light modulating devices such as image gobos light color filters, iris, lenses beam.

## Description

### TECHNICAL FIELD OF THE INVENTION

The present invention generally relates to an automated luminaire, specifically to a luminaire utilizing a plasma light source.

### BACKGROUND OF THE INVENTION

Luminaires with automated and remotely controllable functionality are well known in the entertainment and architectural lighting markets. Such products are commonly used in theatres, television studios, concerts, theme parks, night clubs and other venues. A typical product will typically provide control over the pan and tilt functions of the luminaire allowing the operator to control the direction the luminaire is pointing and thus the position of the light beam on the stage or in the studio. This position control is often done via control of the luminaire's position in two orthogonal rotational axes usually referred to as pan and tilt. Many products provide control over other parameters such as the intensity, color, focus, beam size, beam shape and beam pattern. The beam pattern is often provided by a stencil or slide called a gobo which may be a steel, aluminum or etched glass pattern. The products manufactured by Robe Show Lighting such as the ColorSpot 700E are typical of the art.

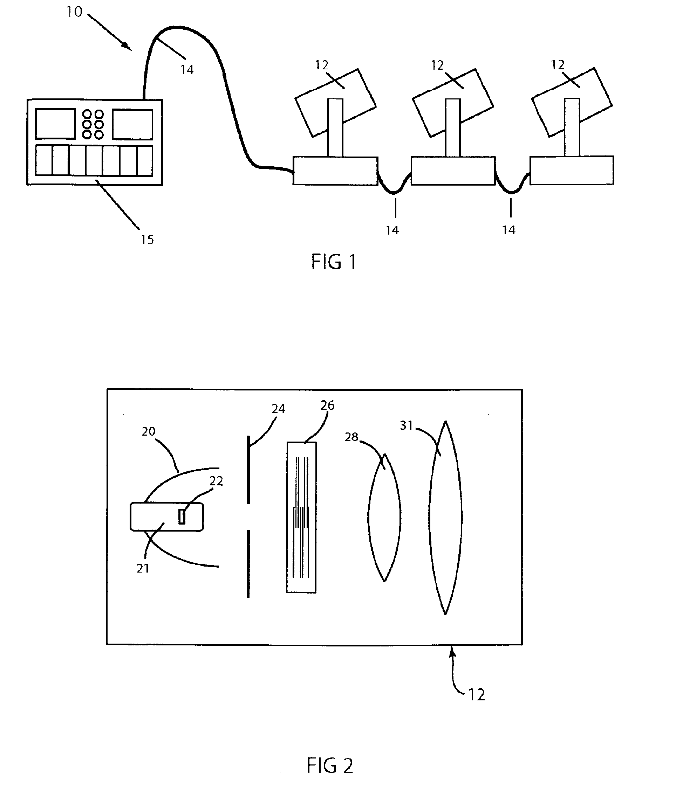

**Figure 1** illustrates a typical multiparameter automated luminaire system **10**. These systems commonly include a plurality of multiparameter automated luminaires **12** which typically each contain on-board a light source (not shown), light modulation devices, electric motors coupled to mechanical drives systems and control electronics (not shown). In addition to being connected to mains power either directly or through a power distribution system (not shown), each luminaire is connected in series or in parallel to data link **14** to one or more control desks **15**. The luminaire system **10** is typically controlled by an operator through the control desk **15**. Consequently, to effect this control both the control desk **15** and the individual luminaires typically include electronic circuitry as part of the electromechanical control system for controlling the automated lighting parameters.

**Figure 2** illustrates a prior art automated luminaire **12**. A lamp **21** contains a light source **22** which emits light. The light is reflected and controlled by reflector **20** through an aperture or imaging gate **24**. The resultant light beam may be further constrained, shaped, colored and filtered by optical devices **26** which may include dichroic color filters, dimming shutters, and other optical devices well known in the art. The final output beam may be transmitted through output lenses **28** and **31** which may form a zoom lens system.

Such prior art automated luminaires use a variety of technologies as the light sources for the optical system. For example it is well known to use incandescent lamps, high intensity discharge lamps and LEDs as light sources in such a luminaire. These light sources suffer from a range of limitations that make them less than ideal for such an application. Incandescent lamps, for example, typically have a large filament which performs inefficiently in the small size optics typical of such a product necessitated by the requirement to pan and tilt the luminaire rapidly and thus to keep the size and weight down to a minimum. This mismatch will significantly reduce the output of the luminaire. High intensity discharge lamps often have problems with irregular or flickering arcs caused by the movement of the luminaire. This movement causes unstable convection currents within the arc tube thus disturbing the position of the arc. Arc movement like this is visible in the beam as flicker or instability in the image. High intensity discharge lamps may also have problems with being dimmed which can cause a change in color temperature and unstable arcs. Further both incandescent and high intensity discharge lamps have relatively short lives and need to be replaced very often.

Additionally, the prior art optical systems often produce uneven and irregular coloring and dimming across the output beam. The light passing through optical devices **26** is already partially collimated by reflector **20** such that, for example, a yellow filter partially inserted into the beam within optical device **26** will color the edges of the output beam yellow and not, as desired, color the entire beam. Similarly the insertion of dimming shutters, flags or other mechanical dimmer will not produce an even dimming effect across the beam but will instead tend to vignette the beam and produce visible patterning. An effective homogenization system is needed to correct these problems so as to evenly distribute the color across the entire beam and to provide an evenly distributed optical dimming system.

There is a need for an automated luminaire using a light source and homogenization system which is small, stable and has a long life with good color rendering and dimming ability.

### SUMMARY OF THE INVENTION

The invention is defined in claims 1 and 9, respectively. Particular embodiments of the invention are set out in the dependent claims.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

**FIGURE 1** illustrates a typical automated lighting system;

**FIGURE 2** illustrates a prior art system;

**FIGURE 3** illustrates a cross sectional view of plasma light source automated luminiare;

**FIGURE 4** illustrates a cross sectional view of another embodiment of a plasma light source luminaire;

**FIGURE 5** illustrates in greater detail a light collector system *in situ* in a plasma light source luminaire;

**FIGURE 6** illustrates a cross sectional view of an alternative light collector system;

**FIGURE 7** illustrates an alternative view of a plasma light source luminaire;

**FIGURE 8** illustrates a perspective view of the embodiment of the light collector of **Figure 4****,** **Figure 5** and **Figure 7****;**

**FIGURE 9** illustrates another view of a plasma light source automated luminaire;

**FIGURE 10** illustrates in greater detail components of a plasma light source Automated luminaire;

**FIGURE 11** illustrates an exploded perspective view of components of the plasma light source luminaire;

**FIGURE 12** illustrates a perspective view of an embodiment of a plasma source lamp assembly; and

**FIGURE 13** illustrates a perspective cross sectional view through the lamp assembly embodiment of **Figure 12****.**

### DETAILED DESCRIPTION OF THE INVENTION

Preferred embodiments of the present invention are illustrated in the FIGUREs, like numerals being used to refer to like and corresponding parts of the various drawings.

The present invention generally relates to an automated luminaire, specifically to a luminaire utilizing a plasma light source. Plasma light sources, such as those offered by the Luxim Corporation, offer a compact light source with consequent high efficiency optical coupling to reflectors and down-stream optical systems. Additionally such lamps provide a broad spectrum of light with a good color rendering index (CRI).

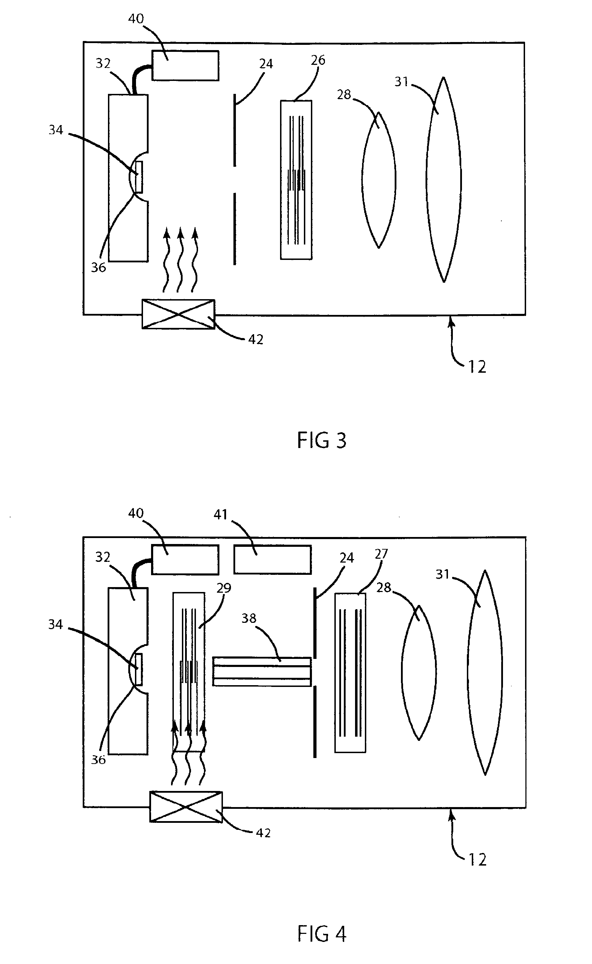

**Figure 3** illustrates a cross sectional view of an embodiment of a plasma lamp light source **32**automated luminaire **12**. A plasma lamp system **32** contains a light source capsule **34** which emits light. The light is reflected and controlled by reflector **36** through an aperture or imaging gate **24**. The resultant light beam may be further constrained, shaped, colored and filtered by optical devices **26** which may include dichroic color filters, goboes, rotating goboes, irises, framing shutters, effects glass and other optical devices well known in the art. The final output beam may be transmitted through output lenses **28** and **31** which may form a zoom lens system. Although the figures shown here are of an embodiment with imaging optics that is capable of producing projected images from the gobo wheels and other pattern producing optical devices the invention is not so limited and the light output from the optical system may be imaging where a focused or defocused image is projected, or non-imaging where a diffuse soft edged light beam is produced, without detracting from the spirit of the invention. The invention may be used as an illumination and homogenization system with optical systems commonly known as spot, wash, beam or other optical systems known in the art.

Reflectors in automated luminaires are typically constructed of aluminum or glass however because of the construction of the plasma lamp system with well controlled cooling an embodiment of the disclosure reflector **36** may be constructed of a polymer or plastic. This allows a complex non-spherical shape for the reflector to be used simply and inexpensively. The small size of the plasma lamp capsule **24** and light source **32** allows for a compact high efficiency optical system.

The light source capsule **34** may be cooled either by an active cooling system (not shown) that is part of the lamp system **32** or, in further embodiments, cooling may be provided by the system integrated in the luminaire **12** and may include part fans **42** which may also be responsible for general cooling of the optical systems **24**, **26**, **28** and **31** as well as electronic circuitry and motor systems (not shown). In further embodiments, cooling systems may be active using feedback from the lamp control system and temperature probes measuring the ambient temperature in the luminaire **12**.

Such systems may use the required lamp **32** power **40** to control the speed of cooling fans **42**. For example, if the user commands the lamp to dim down to 20% output through the control console and link as shown in **Figure 1** then the cooling system may respond to this by reducing fan **42** speed to a level commensurate with the power level **40** being provided to lamp **32**. The commensurate level of fan speed is determined as a function of the heat power to heat generation curve of the source taken together with the cooling to fan speed curve(s) of for a internal external temperature differential. In yet further embodiments components of the lamp system may be cooled through conduction and convection through heat sinks or thermally conductive outer covers.

In further embodiments the lamp may be ignited, controlled in power, doused and re-ignited through commands received over the communication link **14** shown in **Figure 1****.** Such commands may be transmitted over protocols including but not limited to industry standard protocols DMX512, RDM, ACN, Artnet, MIDI and/or Ethernet.

In yet further embodiments the lamp **32** may be controlled through such communication protocols such that:
A. The lamp is dimmed over a continuous and contiguous range from 100% down to approximately 20% (depending on the light sources capabilities).
B. The lamp is step-changed rapidly between a first output intensity and a second output intensity. This type of intensity change is commonly known as a strobe effect. The Plasma lamp offers advantages for this kind of operation because of the very rapid response time of the plasma capsule to requested changes in power and thus output intensity.
C. The lamp strobing in (B) is may be synchronized with a mechanical dimming or blackout system or with an optical iris.

Further advantages of the plasma lamp system may include:
A. The plasma lamp is insensitive to changes of orientation. Prior art lamps may change intensity due to arc wander or suffer from overheating of some components when the lamp is positioned at some orientations. The plasma system does not suffer from these problems.
B. The plasma lamp has a very long life - many times more than high intensity discharge or incandescent prior art systems.

**Figure 4** illustrates a cross sectional view of an alternative embodiment of a plasma light source automated luminaire incorporating a light collector/integrator **38**. Light integrator **38** is a device utilizing internal reflection so as to collect homogenize and constrain and conduct the light from plasma light source **34** and reflector **36** to other optical element(s). Light integrator **38** may be a hollow tube with a reflective inner surface such that light impinging into the entry port may be reflected multiple times along the tube before leaving at the exit port. Optical devices **29** may comprise dichroic color filters, color mixing filters, dimming flags or shutters and other optical devices known in the art where homogenization of the light beam after passing through them is advantageous. Optical devices **27** may comprise goboes, rotating goboes, irises, framing shutters, effects glass, beam shapers and other optical devices known in the art that do not require subsequent homogenization of the light beam. For example optical devices that produce images do not require downstream homogenization whereas those that color or shape the light beam in a non-imaging manner typically do require it. As light is reflected down the tube in different directions from the light source the light beams will mix forming a composite beam where different colors of light are homogenized and an evenly colored beam is emitted through aperture **24**. Light integrator **38** may be a square tube, a hexagonal tube, a circular tube, an octagonal tube or a tube of any other cross section. In a further embodiment light integrator **38** may be a solid rod constructed of glass, transparent plastic or other optically transparent material where the reflection of the incident light beam within the rod is due to total internal reflection (TIR) from the interface between the material of the rod and the surrounding air. The integrating rods may be circular, other polygonal or irregular cross-sectional shape.

The homogenized light exits from the light integrator **38** and may then be further controlled and directed by other optical elements **24, 27, 28** and **31**. The selection of specific aperture **24,** optical devices **27,** and lenses **28** and **31** will vary dependant on the intended use of the luminaire as, for example, a spot, wash or beam unit and are illustrated herein as examples only. The inclusion, omission and choice of aperture **24,** optical devices **27,** and lenses **28** and **31** are exemplary only and are not intended to limit the invention.

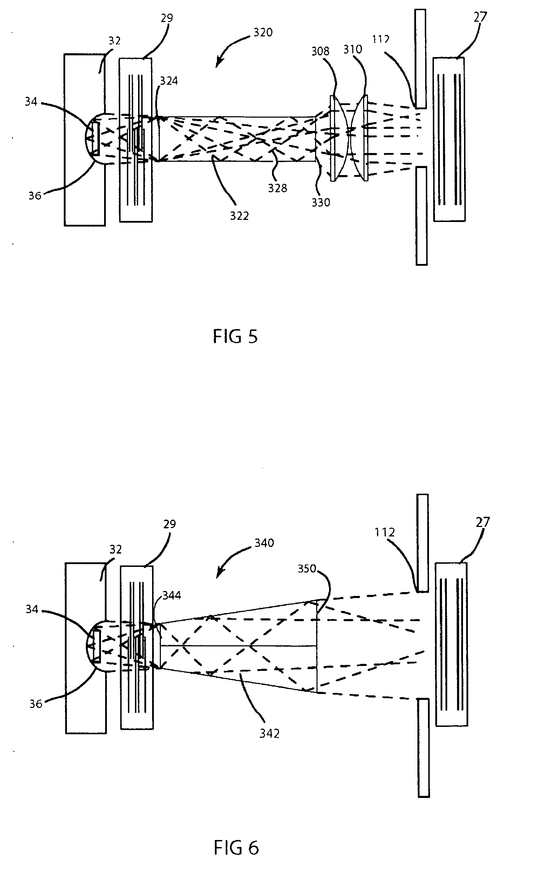

**Figure 5** illustrates a layout diagram of a light collector/integrator system *in situ* with indicia of the approximate path of light as it passes through the system **320.** Plasma light source **34** and reflector **36** direct light through optical devices **29** into the entrance aperture **324** of light integrator **322.** Within light integrator **322** the light beams **328** may reflect from the walls any number of times from zero to a number defined by the geometry of the tube **322** and the entrance angle and position of the incident light. This variation in path length and the different numbers of reflections causes homogenization of the light beams within light integrator **322**. A feature of a light integrator **322** which comprises a hollow or tube or solid rod where the sides of the rod or tube are essentially parallel and the entrance aperture **324** and exit aperture **330** are of the same size is that the divergence angle of light exiting the integrator **322** will be the same as the divergence angle for light entering the integrator **322.** Thus a parallel sided integrator **322** has no effect on the beam divergence. Light exiting the light integrator **322** may be further controlled and directed by optical elements **308** and **310** which may form a conventional condensing lens system, to direct light towards aperture **112.** Optical elements **27** receive the homogenized light passing through aperture **112.** Although two optical elements **308** and **310** are herein illustrated the invention is not so limited and any optical system as known in the art may be utilized to direct the exit beam towards aperture **112.** In particular in further embodiments careful design of reflector **36** and integrator **322** may permit optical elements **308** and **310** to be omitted.

**Figure 6** illustrates a layout diagram of an alternative embodiment of a light collector/integrator **340** *in situ* in a plasma light source luminaire including indicia of the approximate path of light as it passes through the system **340.** Plasma light source **34** and reflector **36** direct light through optical devices **29** into the entrance aperture **344** of tapered light integrator **342.** Within tapered light integrator **342** the light beams may reflect from the walls any number of times from zero to a number defined by the geometry of the tube and the entrance angle and position of the incident light. This variation in path length and the different numbers of reflections causes homogenization of the light beams within light integrator **342.** A feature of a tapered light integrator **342** which comprises a hollow or tube or solid rod where the sides of the rod or tube are tapered and the entrance aperture **344** is smaller than the exit aperture **350** is that the divergence angle of light exiting the integrator **342** will be smaller than the divergence angle for light entering the integrator **342.** The combination of a smaller divergence angle from a larger aperture **350** serves to conserve the etendue of the system **340.** Thus a tapered integrator **342** may provide similar functionality to the condensing optical system **308** and **310** illustrated in **Figure 4** and light may be delivered directly to aperture **112** without any need for further optical components to control and shape the beam.

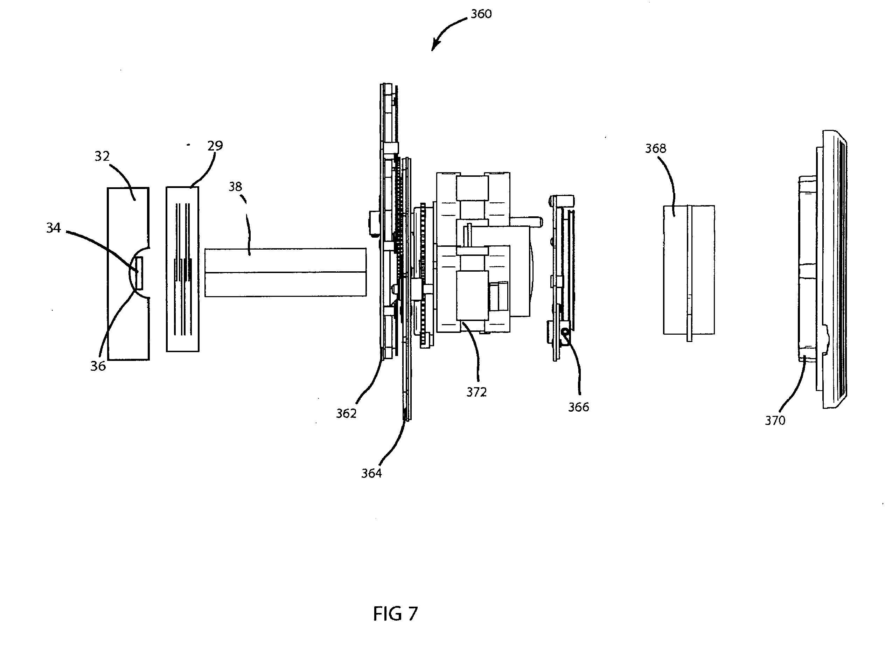

**Figure 7** illustrates an exemplary embodiment **360** of a plasma light source an automated luminaire. Plasma light source **34** and reflector **36** direct light through optical elements **29** into the entrance aperture of light integrator **38.** Optical devices **29** may comprise dichroic color filters, color mixing filters, dimming flags or shutters and other optical devices known in the art where homogenization of the light beam after passing through them is advantageous. Within light integrator **38** variation in path length and the different numbers of reflections causes homogenization of the light beams. Light exiting the light integrator **38** is directed towards the remainder of the optical system.

The emergent homogenized light beam may be directed through a series of optical devices as well known within automated lights. Such devices may include but not be restricted to rotating gobos **362,** static gobos **364,** iris **366,** color wheels, framing shutters, frost and diffusion filters, beam shapers and other optical devices known in the art that do not require homogenization. The final light beam may then pass through a series of objective lenses **368** and **370** which may provide variable beam angle or zoom functionality as well as the ability to focus on various components of the optical system before emerging as the required light beam.

Optical elements such as rotating gobos **362,** static gobos **364,** color mixing systems **29,** color wheels and iris **366** may be controlled and moved by motors **372.** Motors **372** may be stepper motors, servo motors or other motors as known in the art.

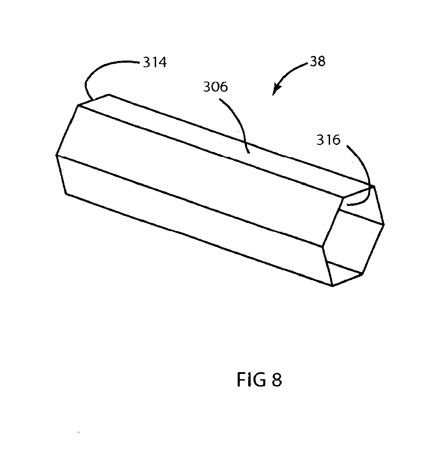

**Figure 8** illustrates a perspective view of an embodiment of the light collector/integrator **38** from **Figures 4****,** **Figure 5** and **Figure 7****.** In the illustrated embodiment light collector/integrator **38** comprises a hollow tube **306** reflective on its inside surfaces that is polygonal in cross section and has an entrance aperture **314** and an exit aperture **316.**

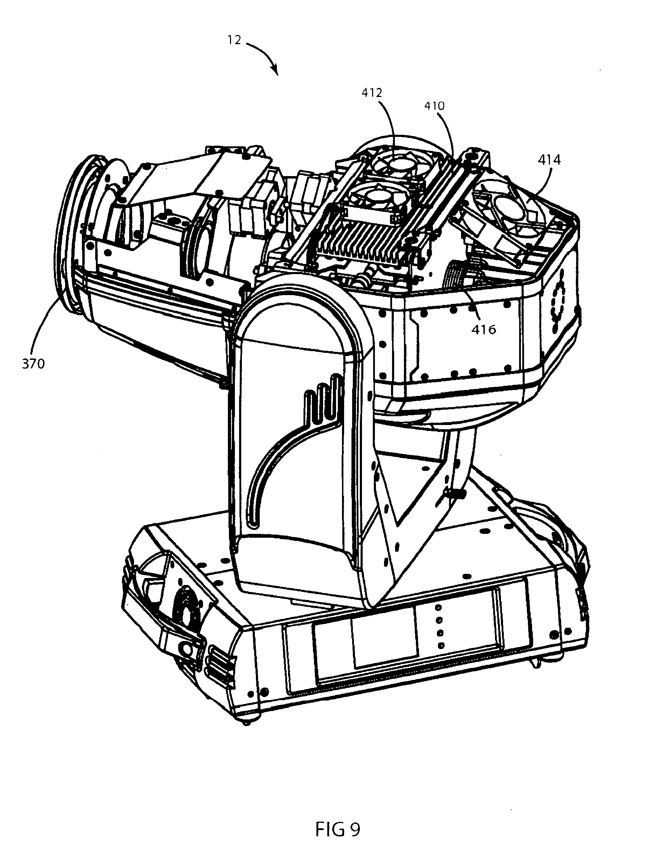

**Figure 9** is a further exemplary embodiment of a plasma light source automated luminaire. An automated luminaire **12** utilizes a plasma light source with associated cooling **414.** In this embodiment, the power supply **410** for the plasma lamp is mounted within the body of the automated luminaire **12** to minimize connection lengths for the microwaves supplied by the power supply **410** to the plasma lamp. The power supply **410** may be cooled by fans **412.** In further embodiments the power supply **410** is cooled by convention and conduction through heat sinks or connection with a thermally conductive outer case of the automated luminaire **12.** In these embodiments the volume of air supplied by the cooling fans may be reduced. In alternative embodiments cooling fans are not employed.

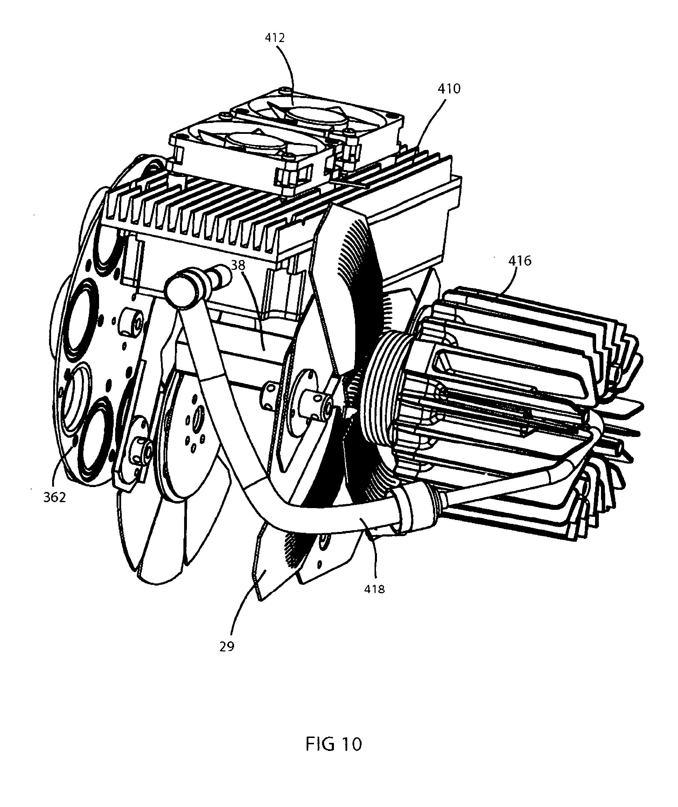

**Figure 10** illustrates in greater detail an embodiment of a plasma light source and other components of an automated luminaire. The Lamp power supply **410** which is cooled by fans **412** provides microwave energy through waveguide connection **418** to the plasma lamp assembly with its associated heat sink **416.** In the embodiment illustrated, the light from the plasma lamp passes through optical devices **29** into light integrator **38** which is comprised of a hollow tube with a reflective inner surface such that light impinging into the entry port may be reflected multiple times along the tube before leaving at the exit port. Optical devices **29** may comprise dichroic color filters, color mixing filters, dimming flags or shutters and other optical devices known in the art where homogenization of the light beam after passing through them is advantageous. The homogenized light exits from the light integrator **38** and may then be further controlled and directed by other optical elements such as the gobo wheel **362** illustrated.

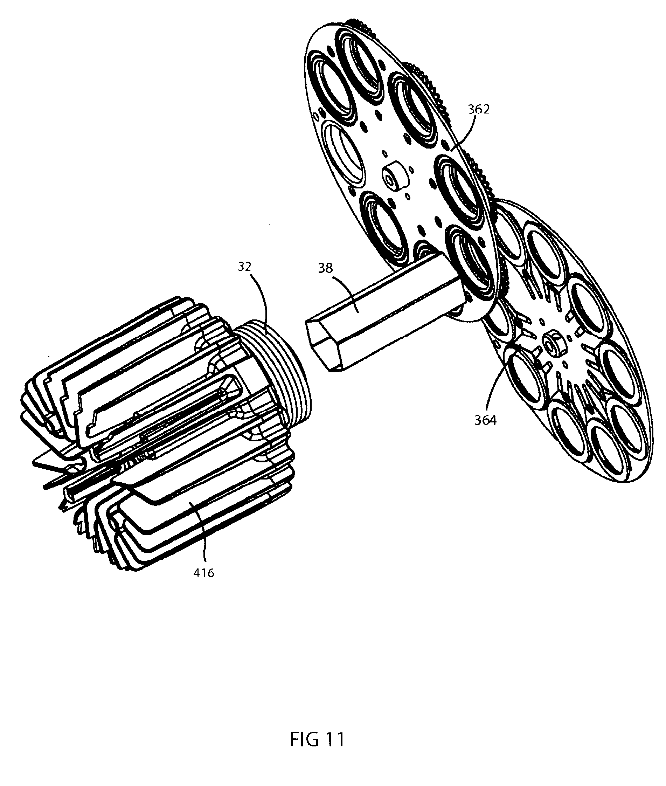

**Figure 11** illustrates an exploded view of an embodiment of the invention. Light source **32** within its heat sink **416** directs light through light integrator **38** to optical elements **362** and **364.**

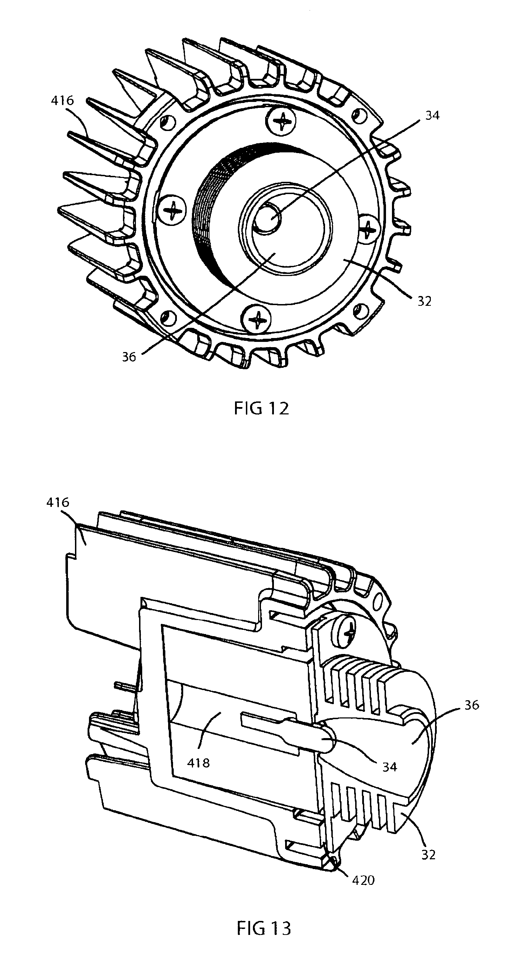

**Figure 12** illustrates the detail of components of the lamp assembly of an embodiment of the invention utilizing a plasma lamp light source **32** in an automated luminaire. A plasma lamp system **32** contains a light source capsule **34** which emits light. The light is reflected and controlled by reflector **36.** A heatsink **416** surrounds the light source to dissipate heat from the system.

**Figure 13** illustrates a cross section of the lamp assembly of an embodiment of the invention utilizing a plasma lamp light source **32** in an automated luminaire. A plasma lamp system **32** contains a light source capsule **34** which emits light. The light is reflected and controlled by reflector **36.** A heatsink **416** surrounds the light source to dissipate heat from the system and the microwave plasma generator **418.** Reflector **36** may be constructed out of aluminum, aluminum alloy, magnesium or other heat conductive materials well known in the art. The reflective surface of reflector **36** may be polished aluminum or be provided with various coatings well known to provide enhanced reflectance selected from but not limited to high purity aluminum, anodizing, silver, and thin film dichroic coatings. Reflector **36** may have an integrated heat sink **32** with fins such that the reflector may be efficiently cooled to protect said reflective coatings from heat damage.

In alternative embodiments the integrated reflector **36** and heat sink **32** may be connected to electrical ground and thus provide improved additional shielding for microwave radiation that may be emitted through lamp capsule **34.**

The embodiment illustrated includes an air gap(s) **420** between reflector **36** with its associated heat sink **32** and microwave plasma generator **418.** The air gap(s) **420** provide a path for air flow from cooling fans so as to provide increased cooling of both light source capsule **34** and the coated reflector **36** such that reflector **36** may be efficiently cooled to protect the reflective coatings from heat damage.

In the embodiment illustrated the air channels are provided between the reflector integrated heat sink and the lamp heat sink. In other embodiments the air channels may be employed in different locations. It is important that the air channels allow for airflow while at the same time preventing or minimizing microwave leakage.

While the disclosure has been described with respect to a limited number of embodiments, those skilled in the art, having benefit of this disclosure, will appreciate that other embodiments may be devised which do not depart from the scope of the disclosure as disclosed herein. The disclosure has been described in detail, it should be understood that various changes, substitutions and alterations can be made hereto without departing from the scope of the disclosure.

## Claims

1. A multi-parameter luminaire comprising:
a light source emitting light directed toward an inlet aperture of
an elongated light beam integrator which receives the light from the light source and homogenizes the light via internal reflection toward an outlet aperture.

2. The multi-parameter luminaire of claim 1 wherein:
A light source is a plasma light source.

3. The multi-parameter luminaire of claim 1 wherein:
the light beam integrator is hollow with a reflective internal surface.

4. The multi-parameter luminaire of claim 1 wherein:
the light beam integrator is solid and constructed of material(s) that results in internal reflectance for the angle of incidence of the light entering the inlet aperture of the light beam integrator.

5. The multi-parameter luminaire of claim 3 wherein
the elongated light beam integrator has a smooth sided cross-section.

6. The multi-parameter luminaire of claim 5 wherein
the smooth sided cross-section is circular.

7. The multi-parameter luminaire of claim 3 wherein:
the elongated light beam integrator has a polygonal cross-section.

8. The multi-parameter luminaire of claim 1 wherein:
the cross-sectional area of the inlet aperture of the light beam integrator is smaller than the cross-sectional area of the outlet aperture of the light beam integrator.

9. A light-beam engine comprising:
a light source emitting light directed toward an inlet aperture of
an elongated light beam integrator which receives the light from the light source and homogenizes the light via internal reflection toward an outlet aperture.

10. The light-beam engine of claim 9 wherein:
A light source is a plasma light source.

11. The light-beam engine of claim 9 wherein:
the light beam integrator is hollow with a reflective internal surface.

12. The light-beam engine of claim 9 wherein:
the light beam integrator is solid and constructed of material(s) that results in internal reflectance for the angle of incidence of the light entering the inlet aperture of the light beam integrator.

13. The light-beam engine of claim 11 wherein
the elongated light beam integrator has a smooth sided cross-section.

14. The light-beam engine of claim 13 wherein
the smooth sided cross-section is circular.

15. The light-beam engine of claim 11 wherein:
the elongated light beam integrator has a polygonal cross-section.

16. The light-beam engine of claim 11 wherein:
the cross-sectional area of the inlet aperture of the light beam integrator is smaller than the cross-sectional area of the outlet aperture of the light beam integrator.
